# EUROPÄISCHE PATENTSCHRIFT

(11) **EP 3 052 800 B1**
(45) Veröffentlichungstag und Bekanntmachung des Hinweises auf die Patenterteilung: **26.06.2019**
(21) Anmeldenummer: 14758550.9
(22) Anmeldetag: 02.09.2014
(51) Int. Cl.: F02M 61/14, F16L 3/12, F02M 63/02, F16L 3/13, F02M 69/46

(54) **HALTER ZUR BEFESTIGUNG EINER KOMPONENTE AN EINER BRENNKRAFTMASCHINE**
HOLDER FOR FASTENING A COMPONENT TO AN INTERNAL COMBUSTION ENGINE
SUPPORT PERMETTANT DE FIXER UN COMPOSANT SUR UN MOTEUR À COMBUSTION INTERNE

(30) Priorität: 01.10.2013 DE 102013219892
(43) Veröffentlichungstag der Anmeldung: 10.08.2016
(73) Patentinhaber: Robert Bosch GmbH, 70442 Stuttgart (DE)
(72) Erfinder: LANG, Klaus, 70439 Stuttgart (DE); FROIHOFER, Thomas, 74336 Brackenheim (DE)
(86) Internationale Anmeldenummer: PCT/EP2014/068590
(87) Internationale Veröffentlichungsnummer: WO 2015/049082

(56) Entgegenhaltungen:
- EP-A1- 2 072 806
- DE-C1- 19 536 316
- US-A- 5 121 894

## Beschreibung

### Stand der Technik

Die Erfindung betrifft einen Halter zur Befestigung einer Komponente, insbesondere eines Brennstoffverteilers, an einer Brennkraftmaschine sowie eine Anordnung mit einer Komponente und wenigstens einem Halter. Speziell betrifft die Erfindung das Gebiet der Brennstoffeinspritzanlagen von Brennkraftmaschinen.

Aus der EP 2 072 806 A1 ist bereits ein Halter zur Befestigung einer Komponente, insbesondere eines Brennstoffverteilers, an einer Brennkraftmaschine bekannt. Neben einer Klammer umfasst die Verbindungseinheit eine flexible Befestigungsanordnung, die einen Lamellensatz aufweist, der wenigstens zwei nebeneinander angeordnete Lamellen aufweist, wobei der Lamellensatz einen ersten Bereich zum Verbinden mit dem ersten Motorbereich und einen zweiten Bereich zum Verbinden mit dem Brennstoffverteiler über die Klammer besitzt. Wenigstens einer der beiden Bereiche weist Basisbereiche der zwei Lamellen auf, die zusammengeklemmt sind.

Aus der US 5,121,894 A ist bereits eine Halteklammer für einen Brennstofffilter bekannt. Durch eine Öffnung der Halteklammer wird der Brennstofffilter eingebracht. Im eingebauten Zustand umklammern die halbschalenförmigen Seitenteile der Halteklammer den Brennstofffilter und sichern ihn.

Aus der US 7,406,946 B1 ist eine Brennstoffverteilerleiste bekannt, die über einen Halter an einer Brennkraftmaschine befestigt ist. Hierbei ist ein Verbindungskörper des Halters über eine Schraube mit der Brennkraftmaschine verbunden. Der Verbindungskörper des Halters ist außerdem mit einem rohrförmigen Grundkörper der Brennstoffverteilerleiste verbunden. Hierbei ist es denkbar, dass der Verbindungskörper des Halters durch eine Lötverbindung mit dem rohrförmigen Grundkörper der Brennstoffverteilerleiste verbunden ist.

Die aus der US 7,406,946 B1 bekannte Befestigung der Brennstoffverteilerleiste an der Brennkraftmaschine hat den Nachteil, dass es insbesondere an dem Übergang zwischen dem Verbindungskörper des Halters und dem rohrförmigen Grundkörper der Brennstoffverteilerleiste kerbbedingt zu Spannungsspitzen kommt. Ein weiterer Nachteil ist, dass die einzelnen Bauteile, insbesondere der Verbindungskörper des Halters und der rohrförmige Grundkörper der Brennstoffverteilerleiste, während des Fügeprozesses radial gehalten werden müssen, um die gewünschte Position am gefügten Bauteil zu erreichen. Besonders kritisch ist dies für fest angebundene, wie zum Beispiel angelötete, Bauteile, bei denen der Spalt zwischen den einzelnen Bauteilen, insbesondere dem rohrförmigen Grundkörper und dem Verbindungskörper, minimal sein muss.

Weiterhin muss an dem Anbauteil, insbesondere dem Verbindungskörper, oder den Anbauteilen eine Geometrie erzeugt werden, die möglichst identisch zu der Rohrgeometrie des rohrförmigen Grundkörpers der Brennstoffverteilerleiste ist, was sich aufwändig gestaltet. Dies gestaltet sich umso schwieriger, je kleiner der Umschlingungswinkel des Anbauteils beziehungsweise der Anbauteile ausgeführt ist. Zum Beispiel können eine messtechnische Erfassung des betreffenden Durchmessersegments und ein Abgleich mit den geforderten Zeichnungsangaben erforderlich sein.

Ein weiterer Nachteil kann sich in Bezug auf einen Vorfügeprozess ergeben. Speziell für einen Vorfügeprozess, der als Heften zur Positionierung, insbesondere durch Schweißen, vor einem nachgeschalteten Lötprozess zur endgültigen Anbindung ausgeführt wird, kommt es häufig zum Brechen der Schweißverbindung vor dem endgültigen Fixieren und damit zu Ausschussteilen. Weiterhin können Heftpunkte eine Schwächung des rohrförmigen Grundkörpers und des Anbauteils beziehungsweise der Anbauteile erzeugen.

Werden das Anbauteil beziehungsweise die Anbauteile als Umformteile ausgeführt, so weisen diese typischerweise Eigenspannungen aufgrund der hohen Umformgrade auf. Diese Eigenspannungen können durch nachfolgende Fertigungsprozesse, wie zum Beispiel eine Wärmebehandlung beim Lötprozess, frei werden, was die Maßhaltigkeit der fertigen Komponenten erheblich verschlechtert.

Die typisch umgeformten Anbauteile weisen ferner aufgrund der Anforderungen, insbesondere die Anbindung an den rohrförmigen Grundkörper, den Bauraum und die Anschlussgeometrie, und der daraus resultierenden Kontur geometrisch ungünstige Bereiche, wie Kerben, auf, die zu Spannungsverläufen mit Spannungsspitzen führen.

Ferner erfordert die typisch radiale Anbindung eine große Lotfläche, da diese auf Abschälung beansprucht wird. Daraus ergibt sich eine ungünstige Kontrollierbarkeit des Lötprozesses. Ferner steigt die Gefahr von Fehlstellen in der Lotfläche mit großer Kontaktfläche. Dabei wird für große Lotflächen viel Lot benötigt, was auch aus Kostengründen nachteilig ist.

Außerdem sind lange gebogene Teile typischerweise in mindestens einer Beanspruchungsrichtung biegeweich. Dies hat niedrige Eigenfrequenzen und eine hohe Beanspruchung zur Folge.

### Offenbarung der Erfindung

Die Aufgabe der Erfindung besteht darin, einen Halter zur Befestigung einer rohrförmigen Komponente, insbesondere eines Brennstoffverteilers, bereitzustellen, der einer hohen Biegebeanspruchung der rohrförmigen Komponente gerecht wird und dabei aber über ihre gesamte Länge einer besonders spannungsarmen Belastung ausgesetzt ist.

Der erfindungsgemäße Halter mit den Merkmalen des Anspruchs 1 und die erfindungsgemäße Anordnung mit den Merkmalen des Anspruchs 9 haben den Vorteil, dass eine verbesserte Ausgestaltung der Verbindung ermöglicht ist. Speziell können eine Kerbwirkung und somit Sprünge im Spannungsverlauf reduziert werden, wobei zugleich eine kostengünstige Ausgestaltung und Herstellung ermöglicht ist.

Bei der Ausgestaltung des Halters ist es von Vorteil, dass eine Hülse vorgesehen ist, dass an einer Außenseite der Hülse eine erste Befestigungsfläche vorgesehen ist, dass ein Befestigungsabschnitt an einem Fußteil des Verbindungskörpers an der ersten Befestigungsfläche der Hülse mit der Hülse verbunden ist, dass an der Außenseite der Hülse eine zweite Befestigungsfläche vorgesehen ist, die von der ersten Befestigungsfläche abgewandt ist, und dass ein Befestigungsabschnitt an einem Fußteil eines weiteren Verbindungskörpers an der zweiten Befestigungsfläche der Hülse mit der Hülse verbunden ist. Hierbei ist der weitere Verbindungskörper vorzugsweise entsprechend dem Verbindungskörper ausgestaltet. Somit kann über die beiden Verbindungskörper in einem gewissen Abstand eine Fixierung der Komponente erzielt werden. Dies verbessert die Stabilität der Verbindung und somit der Befestigung der Komponente an der Brennkraftmaschine.

Somit können sich je nach Ausgestaltung ein oder mehrere der folgenden Vorteile ergeben. Die Kerbwirkungen können reduziert werden, wodurch Sprünge im Spannungsverlauf reduziert werden. Die Reduzierung kann hierbei zwischen dem als Anbauteil ausgestalteten Verbindungskörper und beispielsweise einem Hauptrohr der Komponente durch eine Umschlingung von 360° erzielt werden. Ferner kann die Reduzierung im Einzelteil-Verbindungskörper selbst durch einfache Umsetzung von festigkeitsoptimierter Form und/oder Kontur erzielt werden.

Der Verbindungskörper kann als aufschiebbares beziehungsweise aufgeschobenes Blechteil ausgestaltet werden. Somit ist eine Ausgestaltung des Verbindungskörpers durch ein einfaches Teil möglich, was eine Kostenreduzierung erlaubt.

Außerdem ist ein Toleranzausgleich während der Montage erzielbar. Dies stellt geringere Toleranzanforderungen an die Einzelteile, was eine zusätzliche Kostenreduzierung ermöglicht.

Durch die in den Unteransprüchen aufgeführten Maßnahmen sind vorteilhafte Weiterbildungen des im Anspruch 1 angegebenen Halters und der im Anspruch 9 angegebenen Anordnung möglich.

Der Halter dient zur Befestigung der Komponente an einer Brennkraftmaschine. Hierbei ist die Komponente kein Bestandteil des erfindungsgemäßen Halters. Die Komponente kann durch den Halter insbesondere an einem Zylinderkopf der Brennkraftmaschine befestigt werden. Hierbei ist auch eine mittelbare Befestigung an einer geeigneten, mit der Brennkraftmaschine verbundenen Anbaustruktur möglich. Die Anordnung mit der Komponente und dem zumindest einen Halter kann insbesondere als Brennstoffeinspritzanlage oder als Teil einer Brennstoffeinspritzanlage ausgestaltet sein. Wenn die Anordnung mehrere Halter aufweist, dann sind diese vorzugsweise einander entsprechend ausgestaltet. Vorteilhaft ist es, dass der Winkel, über den sich die Aufnahmefläche des Verbindungskörpers im montierten Zustand bezüglich der Längsachse der Komponente erstreckt, gleich 360° ist. Bei der Längsachse der Komponente kann es sich insbesondere um die Längsachse eines rohrförmigen Grundkörpers der Komponente handeln. Bei dieser Ausgestaltung kann der Verbindungskörper im Bereich seiner Aufnahmefläche ringförmig ausgestaltet sein. Hierbei umschließt der Verbindungskörper dann die Komponente um 360°, so dass der Verbindungskörper im montierten Zustand mit seiner Aufnahmefläche die Komponente an ihrer Außenseite umfänglich umschließt. Bei einer abgewandelten Ausgestaltung kann der Winkel, über den sich die Aufnahmefläche des Verbindungskörpers im montierten Zustand bezüglich der Längsachse der Komponente erstreckt, auch kleiner als 360° sein. Hierdurch kann insbesondere ein Verbindungskörper realisiert werden, der bezüglich dem Umgreifen der Komponente an einer Stelle offen ist. Dies erleichtert die Montage des Verbindungskörpers an der Komponente, wobei ein Toleranzausgleich ermöglicht wird beziehungsweise größere Toleranzen zugelassen werden. Vorteilhaft ist es auch, dass der Verbindungskörper zumindest einen Verbindungsarm aufweist, der im montierten Zustand in Anlage mit der Außenseite der Komponente um die Außenseite der Komponente gebogen ist. Hierbei ist vorzugsweise ein weiterer Verbindungsarm an dem Verbindungskörper vorgesehen, der im montierten Zustand in Anlage mit der Außenseite der Komponente gegenläufig zu dem Verbindungsarm um die Außenseite der Komponente gebogen ist. Je nach Ausgestaltung können die Verbindungsarme hierbei als biegbare Verbindungsarme ausgestaltet sein. Dadurch ist es möglich, dass die Verbindungsarme zunächst so ausgestaltet sind, dass der Verbindungskörper mit den Verbindungsarmen in radialer Richtung zu der Längsachse der Komponente auf beispielsweise den rohrförmigen Grundkörper der Komponente aufgeschoben werden kann. Anschließend können dann die Verbindungsarme entsprechend der Gestalt, insbesondere dem Durchmesser, der Außenseite der Komponente umgebogen werden. Bei einer abgewandelten Ausgestaltung können die Verbindungsarme allerdings zunächst auch nur etwas aufgebogen sein, um eine Montage entlang der Längsachse durch Aufschieben zu ermöglichen. Dann kann anschließend durch Zubiegen der Verbindungsarme eine Anlage zwischen den Verbindungsarmen und beispielsweise dem rohrförmigen Grundkörper erzielt werden.

Vorteilhaft ist es auch, dass im montierten Zustand zwischen dem Verbindungsarm und dem weiteren Verbindungsarm ein Abstand vorgegeben ist und dass der Verbindungsarm und der weitere Verbindungsarm an dem vorgegebenen Abstand stoffschlüssig miteinander verbunden sind. Beispielsweise können die Verbindungsarme über eine Schweißnaht oder zumindest einen Schweißpunkt miteinander verbunden sein. Hierdurch ist eine zuverlässige Fixierung an der Komponente möglich.

Bei einer abgewandelten Ausgestaltung ist es allerdings auch möglich, dass im montierten Zustand zwischen dem Verbindungsarm und dem weiteren Verbindungsarm ein Spalt gebildet ist. Solch ein Spalt ermöglicht gegebenenfalls ein elastisches Aufbiegen, wodurch ein seitliches Aufschieben des Verbindungskörpers auf beispielsweise einen rohrförmigen Grundkörper der Komponente erleichtert wird.

Ferner ist es vorteilhaft, dass der Verbindungsarm und gegebenenfalls der weitere Verbindungsarm federnd ausgestaltet sind und dass der Halter mit seinem Verbindungskörper mittels einer Schnappverbindung mit der Komponente verbindbar ist. Hierdurch kann der Verbindungskörper in radialer Richtung zu der Längsachse der Komponente auf beispielsweise den rohrförmigen Grundkörper der Komponente aufgeschoben werden, wobei sich der zumindest eine Verbindungsarm aufbiegt, um anschließend ein Einschnappen an dem rohrförmigen Grundkörper zu ermöglichen. Dadurch ist ebenfalls eine gut zu montierende und zuverlässige Verbindung realisierbar.

Bei einer weiteren möglichen Ausgestaltung ist es vorteilhaft, dass der Verbindungskörper einen verformbaren Ring mit zumindest einer Klemmschlaufe aufweist. Hierdurch kann der Öffnungsquerschnitt des verformbaren Rings zunächst größer vorgegeben sein als ein Außenquerschnitt der Komponente, insbesondere eines rohrförmigen Grundkörpers der Komponente, um die Montage zu erleichtern. Im positionierten Zustand kann dann die Klemmschlaufe auf geeignete Weise zusammengedrückt werden, wodurch sich der Öffnungsquerschnitt des verformbaren Rings verkleinert. Dadurch ist eine Fixierung des Verbindungskörpers an beispielsweise dem rohrförmigen Grundkörper der Komponente möglich.

Außerdem können Zusatzfixierungen beziehungsweise eine Zusatzfixierung, die zum Beispiel durch eine Presspassung ausgestaltet werden kann, entfallen.

Ferner kann die Lotfläche reduziert werden. Dies ermöglicht eine bessere Beherrschbarkeit des Lotprozesses. Außerdem wird eine besserte Überprüfbarkeit des Verlötungsergebnisses durch eine bessere Zugänglichkeit, insbesondere über 360°, erzielt. Außerdem kann eine Kostenreduzierung durch einen geringeren Loteinsatz erreicht werden.

Des Weiteren kann eine erhöhte Baugruppensteifigkeit bei relativ großen Abständen zwischen einer Achse, insbesondere einer Rohrachse, der Komponente und von Befestigungspunkten am Verbindungskörper erreicht werden. Hierbei kann auch eine beliebige Einstellbarkeit der Bauteilsteifigkeit durch Anbringen von entsprechenden Zusatzteilen erzielt werden. Dadurch ergibt sich ein kosten- und festigkeitsoptimiertes Design. Beispielsweise kann eine zusätzliche Versteifung zwischen zwei nebeneinander angeordneten Verbindungskörpern ergänzt werden. Dadurch ergibt sich mit geringem Mehraufwand eine wesentlich verbesserte Bauteilsteifigkeit.

Außerdem kann eine deutliche Reduzierung des Einflusses der Eigenspannung in Nachfolgeprozessen erreicht werden. Dadurch kann die Baugruppenqualität erhöht werden.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigen:
Fig. 1 eine Anordnung mit einer Komponente und einem Halter in einer auszugsweisen, schematischen, räumlichen Darstellung entsprechend einem ersten Ausführungsbeispiel der Erfindung;
Fig. 2 eine Anordnung mit einer Komponente und einem Halter in einer auszugsweisen, schematischen, räumlichen Darstellung entsprechend einem zweiten Ausführungsbeispiel der Erfindung;
Fig. 3 eine Anordnung mit einer Komponente und einem Halter in einer auszugsweisen, schematischen Schnittdarstellung entsprechend einem dritten Ausführungsbeispiel der Erfindung bei einer Montage;
Fig. 4 die in Fig. 3 dargestellte Anordnung entsprechend dem dritten Ausführungsbeispiel der Erfindung in einem montierten Zustand;
Fig. 5 eine Anordnung mit einer Komponente und einem Halter in einer auszugsweisen, schematischen Schnittdarstellung entsprechend einem vierten Ausführungsbeispiel der Erfindung bei einer Montage;
Fig. 6 die in Fig. 5 dargestellte Anordnung entsprechend dem vierten Ausführungsbeispiel der Erfindung in einem montierten Zustand;
Fig. 7 eine Anordnung mit einer Komponente und einem Halter in einer auszugsweisen, schematischen Schnittdarstellung entsprechend einem fünften Ausführungsbeispiel der Erfindung;
Fig. 8 eine Anordnung mit einer Komponente und einem Halter in einer auszugsweisen, schematischen Schnittdarstellung entsprechend einem sechsten Ausführungsbeispiel der Erfindung bei einer Montage;
Fig. 9 die in Fig. 8 dargestellte Anordnung entsprechend dem sechsten Ausführungsbeispiel der Erfindung in einem montierten Zustand;
Fig. 10 eine Anordnung mit einer Komponente und einem Halter in einer auszugsweisen, schematischen Schnittdarstellung entsprechend einem siebten Ausführungsbeispiel der Erfindung und
Fig. 11 eine Anordnung mit einer Komponente und einem Halter in einer auszugsweisen, schematischen Schnittdarstellung entsprechend einem achten Ausführungsbeispiel der Erfindung.

### Ausführungsformen der Erfindung

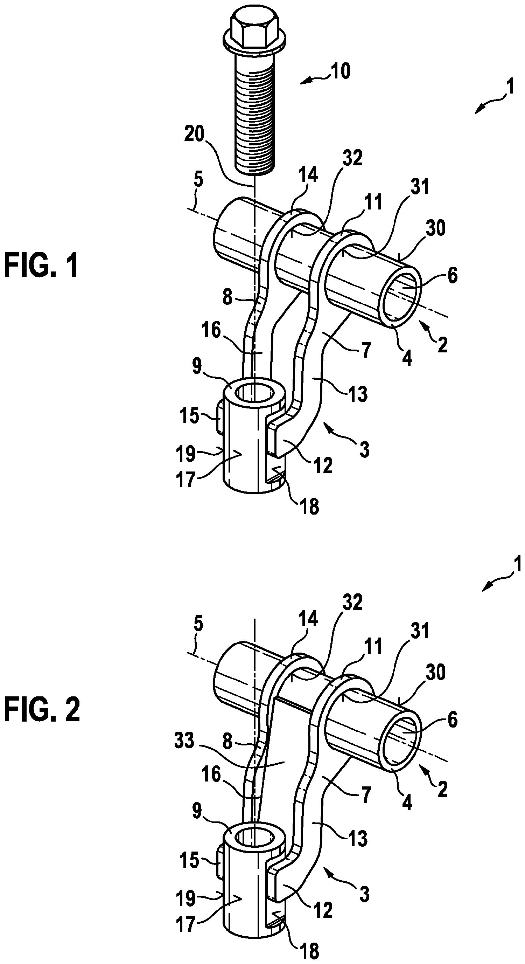

Fig. 1 zeigt eine Anordnung 1 mit einer Komponente 2 und einem Halter 3 in einer auszugsweisen, schematischen, räumlichen Darstellung entsprechend einem ersten Ausführungsbeispiel. Hierbei ist ein rohrförmiger Grundkörper 4 der Komponente 2, der sich entlang einer Längsachse 5 erstreckt, abschnittsweise dargestellt. Innerhalb des rohrförmigen Grundkörpers 4 ist ein Innenraum 6 ausgestaltet, der als Brennstoffraum 6 dient. Im Betrieb kann über den Innenraum 6 Brennstoff geführt werden. Beispielsweise können an dem rohrförmigen Grundkörper 4 mehrere Ausgänge, insbesondere Tassen, vorgesehen sein, über die Brennstoff zu Brennstoffeinspritzventilen führbar ist. Die Komponente 2 ist in solche einem Fall als Brennstoffverteiler 2 ausgestaltet. Der Halter 3 dient dann zum Befestigen des Brennstoffverteilers 2 an einer Brennkraftmaschine. Der Halter 3 kann allerdings auch zum Befestigen sonstiger Komponenten 2 an einer Brennkraftmaschine dienen.

Vorzugsweise sind ein oder mehrere weitere Halter vorgesehen, die entsprechend dem Halter 3 ausgestaltet sein können. Dadurch kann die Komponente 2 über den Halter 3 und gegebenenfalls weitere Halter an der Brennkraftmaschine befestigt werden. Speziell ist dadurch eine Befestigung an einem Zylinderkopf einer Brennkraftmaschine möglich. Allerdings ist auch eine mittelbare Befestigung möglich, bei der der Halter 3 an einer mit der Brennkraftmaschine verbundene Anbaustruktur montiert wird.

Der Halter 3 weist einen Verbindungskörper 7, einen weiteren Verbindungskörper 8, eine Hülse 9 und gegebenenfalls weitere Bauteile, beispielsweise ein als Befestigungsschraube 10 ausgestaltetes Befestigungsmittel 10, auf. Über das Befestigungsmittel 10 kann die Hülse 9 beispielsweise an einen Zylinderkopf einer Brennkraftmaschine angeschraubt werden.

Der Verbindungskörper 7 weist ein Kopfteil 11, ein Fußteil 12 und einen Steg 13 auf, wobei der Steg 13 ein Mittelteil 13 bildet, das das Kopfteil 11 mit dem Fußteil 12 verbindet. Entsprechend weist der weitere Verbindungskörper 8 ein Kopfteil 14, ein Fußteil 15 und einen Steg 16 auf, wobei der Steg 16 ein Mittelteil 16 bildet, das das Kopfteil 14 mit dem Fußteil 15 verbindet.

Die Hülse 9 weist eine zylindermantelförmige Außenseite 17 auf, wobei allerdings eine flache erste Befestigungsfläche 18 und eine flache zweite Befestigungsfläche 19 an der Außenseite 17 ausgestaltet sind. Die Befestigungsflächen 18, 19 erstrecken sich in diesem Ausführungsbeispiel entlang einer Befestigungsachse 20 der Hülse 9 so weit, dass vor einer Verbindung der Verbindungskörper 7, 8 mit der Hülse 9 die Position der Fußteile 12, 15 an den Befestigungsflächen 18, 19 entlang der Befestigungsachse 20 variiert beziehungsweise eingestellt werden kann. Somit können die Fußteile 12, 15 der Verbindungskörper 7, 8 vor dieser Verbindung auf einer geeigneten Höhe bezüglich der Befestigungsachse 20 an der Hülse 9 positioniert werden. Dann ist eine Verbindung der Fußteile 12, 15 an der jeweiligen Befestigungsfläche 18, 19 durch eine stoffschlüssige Verbindung, wie Schweißen oder Löten, möglich. Dabei kann eine Anpassung an den jeweiligen Anwendungsfall und/oder ein Toleranzausgleich erzielt werden. Bei der weiteren Montage kann dann das Befestigungsmittel 10 entlang der Befestigungsachse 20 durch die Hülse 9 geführt werden.

Die erste Befestigungsfläche 18 und die zweite Befestigungsfläche 19 sind voneinander abgewandt an der Hülse 9 ausgestaltet. Hierbei sind die Befestigungsflächen 18, 19 vorzugsweise parallel zueinander an der Hülse 9 ausgestaltet.

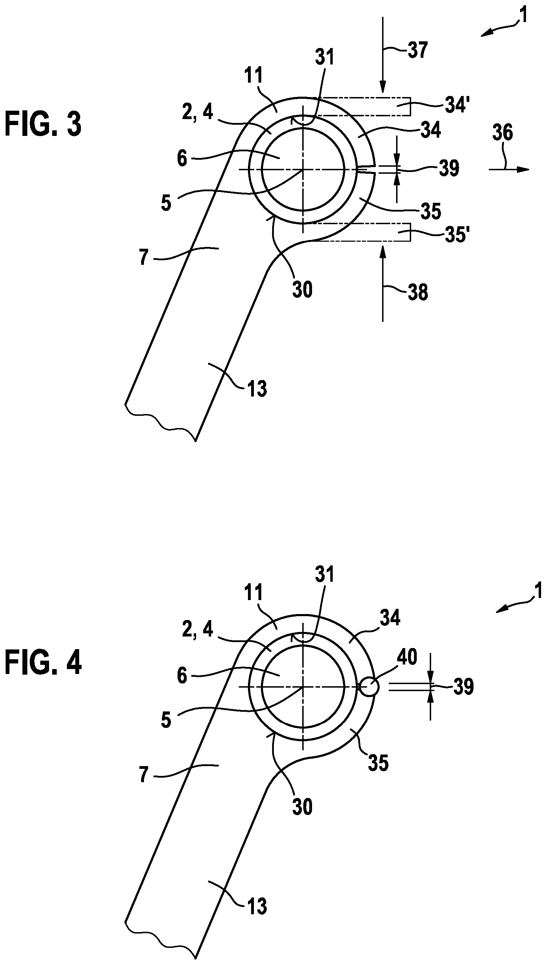

Der rohrförmige Grundkörper 4 der Komponente 2 weist eine Außenseite 30 auf, die zumindest im Bereich des Kopfteils 11 des Verbindungskörpers 7 und im Bereich des Kopfteils 14 des weiteren Verbindungskörpers 8 zylindermantelförmig ausgestaltet ist. In diesem Ausführungsbeispiel ist die Außenseite 30 des rohrförmigen Grundkörpers 4 insgesamt zylindermantelförmig ausgestaltet. An dem Kopfteil 11 des Verbindungskörpers 7 ist eine innen liegende Aufnahmefläche 31 ausgestaltet, wie es in entsprechender Weise beispielsweise in der Fig. 3 gezeigt ist. Die Aufnahmefläche 31 des Verbindungskörpers 7 ist zumindest als Teil einer Zylindermantelfläche ausgestaltet. In diesem Ausführungsbeispiel ist die Aufnahmefläche 31 des Verbindungskörpers 7 als zylindermantelförmige Aufnahmefläche 31 ausgestaltet. Ferner ist an dem Kopfteil 14 des weiteren Verbindungskörpers 8 eine Aufnahmefläche 32 ausgestaltet, die entsprechend der Aufnahmefläche 31 des Verbindungskörpers 7 ausgestaltet ist. In diesem Ausführungsbeispiel sind die Kopfteile 11, 14 der Verbindungskörper 7, 8 als geschlossene Kopfteile 11, 14 ausgestaltet. Daher erstrecken sich die Aufnahmeflächen 31, 32 der Verbindungskörper 7, 8 jeweils über einen Winkel von 360°.

Im montierten Zustand liegen die Kopfteile 11, 14 mit ihren Aufnahmeflächen 31, 32 umfänglich bezüglich der Längsachse 5 an der Außenseite 30 des rohrförmigen Grundkörpers 4 an. Der Winkel, über den sich die Aufnahmeflächen 31, 32 erstrecken, wird hierbei bezüglich der Längsachse 5 betrachtet.

In diesem Ausführungsbeispiel kann die Montage beispielsweise auf folgende Weise erfolgen. Die Montage kann hierbei das Zusammensetzen des Halters 3 sowie die Verbindung des Halters 3 mit der Komponente 2 umfassen. Für die Montage kann der rohrförmige Grundkörper 4 der Komponente 2 zum Beispiel mit Hilfe einer geeigneten Vorrichtung positioniert werden. Ferner kann die Hülse 9 in solch einer Vorrichtung relativ zu dem rohrförmigen Grundkörper 4 positioniert werden. Anschließend können die Verbindungskörper 7, 8 von einer gewählten Seite oder auch von beiden Seiten entlang der Längsachse 5 auf den rohrförmigen Grundkörper 5 aufgeschoben werden. Dabei können die Verbindungskörper 7, 8 an ihren Kopfteilen 11, 14 gedreht und/oder entlang der Längsachse 5 verschoben werden, um die Verbindungskörper 7, 8 bezüglich einer gewünschten Lage auszurichten. Dann sind die Verbindungskörper 7, 8 beispielsweise so positioniert wie es in der Fig. 1 veranschaulicht ist. Anschließend können die Einzelteile miteinander stoffschlüssig verbunden werden. Hierbei können zum Beispiel die Fußteile 12, 15 an den Befestigungsflächen 18, 19 mit der Hülse 9 verlötet werden. Ferner können die Kopfteile 11, 14 an ihren Aufnahmeflächen 31, 32 mit dem rohrförmigen Grundkörper 4 verlötet werden.

In diesem Ausführungsbeispiel umschlingen die Kopfteile 11, 14 somit den rohrförmigen Grundkörper 4 um 360°. Der Umschlingungswinkel ist hierbei bereits im fertigen Anbauteil, nämlich dem Verbindungskörper 7, 8, realisiert, so dass die Montage durch Aufschieben auf den rohrförmigen Grundkörper 4 erfolgt. Für den Lötvorgang können gegebenenfalls Heftpunkte durch Schweißen vorgesehen sein. Gegebenenfalls kann allerdings auch durch ein gewisses Aufpressen bereits ein Kraftschluss erzeugt werden, der eine Vorfixierung der Verbindungskörper 7, 8 auf dem rohrförmigen Grundkörper 4 erlaubt, wodurch solche Heftpunkte entfallen können.

In diesem Ausführungsbeispiel sind die Aufnahmeflächen 31, 32, an denen die Verbindungskörper 7, 8 an der Außenseite 30 des rohrförmigen Grundkörpers 4 anliegen, zylindermantelförmig ausgestaltet. Bei einer abgewandelten Ausgestaltung können die Aufnahmeflächen 31, 32 der Kopfteile 11, 14 der Verbindungskörper 7, 8 auch anders, insbesondere mit einer Polygonkontur, ausgestaltet sein. Entsprechend ist dann die Außenseite 30 des rohrförmigen Grundkörpers 4 abgewandelt, insbesondere mit einer Polygonkontur, ausgestaltet. Hierdurch liegen die Verbindungskörper 7, 8 dann ebenfalls mit ihren Aufnahmeflächen 31, 32 an der Außenseite 30 des rohrförmigen Grundkörpers 4 an, was in diesem Ausführungsbeispiel über den Winkel von 360° erfolgt. Insbesondere erstrecken sich somit die Aufnahmeflächen 31, 32 der Verbindungskörper 7, 8 im montierten Zustand, in dem die Verbindungskörper 7, 8 mit ihren Aufnahmeflächen 31, 32 an der Außenseite 30 der Komponente 2 anliegen, bezüglich der Längsachse 5 der Komponente 2 jeweils über einen Winkel, der größer als 180° ist.

Ferner kann durch weitere oder andere einfache Bauteile, insbesondere eine Hülse 9 mit rundem Querschnitt, eine Hülse 9 mit quadratischem Querschnitt, eine runde Hülse 9 mit Schlüsselweite oder dergleichen, im Montagevorgang die Einhaltung von engen Toleranzen während der Montage der Baugruppe realisiert werden, obwohl die Einzelteile relativ große Toleranzen haben können.

Fig. 2 zeigt eine Anordnung mit einer Komponente 2 und einem Halter 3 in einer auszugsweisen, schematischen, räumlichen Darstellung entsprechend einem zweiten Ausführungsbeispiel. In diesem Ausführungsbeispiel ist eine zusätzliche Versteifung 33 vorgesehen, die in diesem Ausführungsbeispiel durch ein Versteifungselement 33 gebildet ist. Das Versteifungselement 33 ist hierbei zwischen den beiden Verbindungskörpern 7, 8 angeordnet. Das Versteifungselement 33 erstreckt sich hierbei von der Hülse 9 zu dem rohrförmigen Grundkörper 4, wobei das Versteifungselement 33 auf geeignete Weise mit den Verbindungskörpern 7, 8 und/oder der Hülse 9 und/oder dem rohrförmigen Grundkörper 4 verbunden ist.

Somit kann eine erhöhte Baugruppensteifigkeit bei einem relativ großen Abstand zwischen der Längsachse 5 und dem Befestigungspunkt an der Brennkraftmaschine erzielt werden. Die Baugruppensteifigkeit ist hierbei innerhalb gewisser Grenzen beliebig einstellbar, was durch Anbringen zumindest eines Versteifungselements 33 ermöglicht ist. Dadurch ergibt sich eine kosten- und festigkeitsoptimierte Ausgestaltung.

Fig. 3 zeigt eine Anordnung 1 mit einer Komponente 2 und einem Halter 3 in einer auszugsweisen, schematischen Schnittdarstellung entsprechend einem dritten Ausführungsbeispiel bei einer Montage. Das Kopfteil 11 des Verbindungskörpers 7 weist einen Verbindungsarm 34' und einen weiteren Verbindungsarm 35' auf, wobei die Verbindungsarme 34', 35' bei der Montage zunächst parallel zueinander orientiert sind. Das Kopfteil 11 mit den Verbindungsarmen 34, 35 ist somit bei der Montage zunächst geöffnet. Das geöffnete Kopfteil 11 kann dadurch in einer radialen Richtung 36, die radial zu der Längsachse 5 orientiert ist, auf den rohrförmigen Grundkörper 4 gefügt werden. Anschließend werden die Verbindungsarme 34', 35' während des weiteren Montageschrittes um die Außenseite 30 der Komponente 2 gebogen, wie es durch Pfeile 37, 38 veranschaulicht ist. In diesem Ausführungsbeispiel sind die Pfeile 37, 38 gegeneinander orientiert, so dass die Verbindungsarme 34', 35' aufeinander zugebogen werden. Das Erzeugen der Umschlingung entsteht somit während des weiteren Montagevorganges durch zusätzliches Fügen, Drücken, Umformen oder dergleichen. Dadurch wird das Kopfteil 11 geschlossen. Das geschlossene Kopfteil 11 weist dann die gebogenen Verbindungsarme 34, 35 auf.

In diesem Ausführungsbeispiel ergibt sich durch das Biegen der Verbindungsarme 34', 35' eine Umschlingung des rohrförmigen Grundkörpers 4 um fast 360°. Hierbei liegen dann die gebogenen Verbindungsarme 34, 35 an der Außenseite 30 der Komponente 2 an.

Zwischen den Verbindungsarmen 34, 35 kann ein Abstand 39 entstehen beziehungsweise vorgegeben sein. Solch ein Abstand 39 ist in diesem Ausführungsbeispiel möglichst klein vorgegeben. Dadurch kann eine Umschlingung von quasi 360° erzeugt werden.

Fig. 4 zeigt die in Fig. 3 dargestellte Anordnung 1 entsprechend dem dritten Ausführungsbeispiel in einem montierten Zustand. Im Endzustand der Montage, in dem der Durchmesser des Kopfteils 11 geschlossen ist, können die gebogenen Verbindungsarme 34, 35 in ihrer Position fixiert werden. Dies kann zum Beispiel durch einen Schweißpunkt 40 erreicht werden, der die Verbindungsarme 34, 35 an ihren Enden miteinander verbindet. Die Verbindungsarme 34, 35 sind an dem vorgegebenen Abstand 39 stoffschlüssig miteinander verbunden.

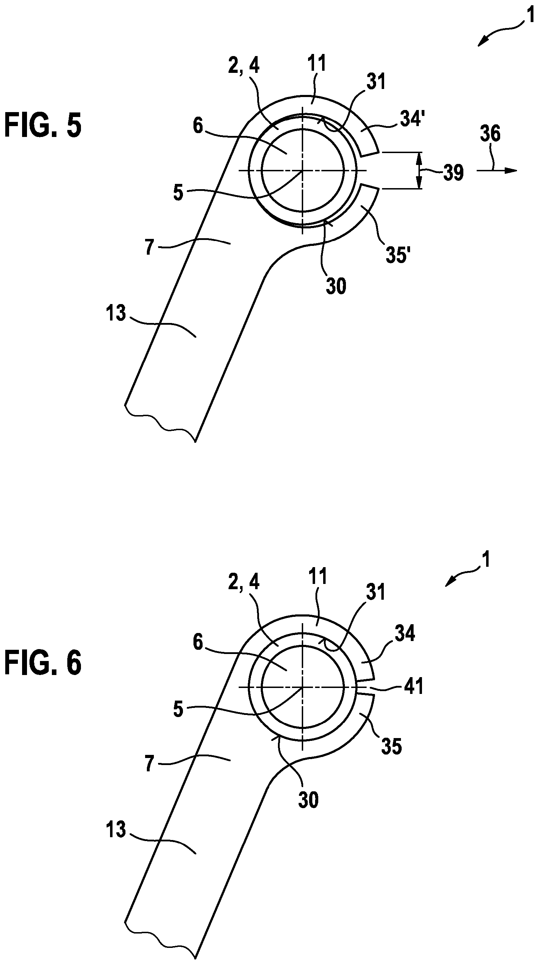

Fig. 5 zeigt eine Anordnung 1 mit einer Komponente 2 und einem Halter 3 in einer auszugsweisen, schematischen Schnittdarstellung entsprechend einem vierten Ausführungsbeispiel bei einer Montage. In diesem Ausführungsbeispiel ist zunächst ein ausreichend großer Abstand 39 zwischen den Verbindungsarmen 34', 35' vorgegeben, der eine vereinfachte Montage des Verbindungskörpers 7 an dem rohrförmigen Grundkörper 4 erlaubt. Hierbei wird der Verbindungskörper 7 entlang der Längsachse 5 des rohrförmigen Grundkörpers 4 auf den rohrförmigen Grundkörper 4 geschoben. Hierbei ist ein Montagespiel zwischen der Aufnahmefläche 31 des Kopfteils 11 und der Außenseite 30 des rohrförmigen Grundkörpers 4 vorgegeben. Wenn der Verbindungskörper 7 dann an dem rohrförmigen Grundkörper 4 positioniert ist, dann erfolgt das Schließen des Durchmessers.

Bei einer abgewandelten Ausgestaltung, bei der die Verbindungsarme 34', 35' aus einem entsprechend geeigneten Material gebildet sind, kann durch Aufbiegen der Verbindungsarme 34', 35' auch ein Fügen des Kopfteils 11 in radialer Richtung 36 auf den rohrförmigen Grundkörper 4 erfolgen. Die Verbindungsarme 34, 35 werden dann anschließend zusammengedrückt.

Fig. 6 zeigt die in Fig. 5 dargestellte Anordnung 1 entsprechend dem vierten Ausführungsbeispiel in einem montierten Zustand. Wenn die Verbindungsarme 34, 35 in ihre Endposition gebogen sind, dann bleibt in diesem Ausführungsbeispiel ein Spalt 41 zwischen den Verbindungsarmen 34, 35 bestehen. Durch diesen Spalt 41 ist eine gewisse Lücke 41 gebildet, durch die die Umschließung kleiner als 360° ist. Vorzugsweise ist der Spalt 41 so groß vorgegeben, dass die Umschließung im montierten Zustand nicht größer als 350° ist. Die Aufnahmefläche 31 des Kopfteils 11 erstreckt sich dann im montierten Zustand bezüglich der Längsachse 5 über einen Winkel, der größer als 180° und nicht größer als 350° ist.

Die Position der Verbindungsarme 34, 35 bei geschlossenem Durchmesser kann durch ein oder mehrere Schweißpunkte oder auch auf andere Weise fixiert werden.

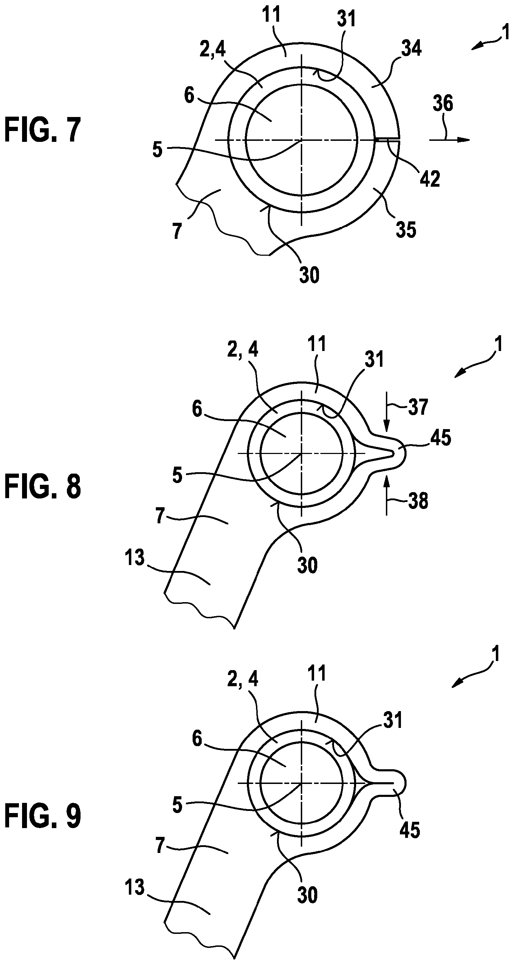

Fig. 7 zeigt eine Anordnung 1 mit einer Komponente 2 und einem Halter 3 in einer auszugsweisen, schematischen Schnittdarstellung entsprechend einem fünften Ausführungsbeispiel. Der Verbindungskörper 7 kann beispielsweise durch Stanzen hergestellt werden. Beim Stanzen kann zur Herstellung des Verbindungskörpers 7 entsprechend dem fünften Ausführungsbeispiel zunächst das Kopfteil 11 im umfänglich geschlossenen Zustand hergestellt werden, wobei die Aufnahmefläche 31 durch Ausstanzen eines Bollkreises aus dem Kopfteil 11 entsteht. Anschließend kann der geschlossene Ring des Kopfteils 11 geschlitzt werden, so dass ein Schlitz 42 entsteht. Durch den Schlitz 42 wird bei einer axialen Montage des Verbindungskörpers 7 entlang der Längsachse 5 ein gewisses Aufdehnen ermöglicht, so dass die Montage erleichtert wird. Es ist auch eine radiale Fügung des geschlitzten Kopfteils 11 auf den rohrförmigen Grundkörper 4 in einer radialen Richtung 36 möglich, wenn die Verbindungsarme 34, 35 des Kopfteils 11 hierfür geeignet aufgebogen werden.

Der Schlitz 42 ermöglicht zur Positionierung ein leichtes Aufschieben beziehungsweise Verschieben während der Montage, da eine Spielpassung realisiert werden kann. Dies ermöglicht auch größere Toleranzen des rohrförmigen Grundkörpers 4 insbesondere in Bezug auf einen Außendurchmesser an der Außenseite 30 des rohrförmigen Grundkörpers 4.

Das Erzeugen der Umschlingung von quasi 360° entsteht während des weiteren Montageprozesses durch zusätzliches Drücken und Fixieren, insbesondere Heften. Ein Spiel zwischen dem Kopfteil 11 des Verbindungskörpers 7 und dem rohrförmigen Grundkörper 4 der Komponente 2 wird dadurch auf ein Minimum reduziert. Dies verbessert auch die Lötqualität.

Bei dieser Ausgestaltung ist der verbleibende stirnseitige Spalt 42 des Verbindungskörpers 7, der durch den Schlitz 42 gebildet ist, minimal, denn der Spalt 42 ist nur durch den erforderlichen Trennschlitz des ringförmigen Kopfteils 11 bedingt.

Fig. 8 zeigt eine Anordnung 1 mit einer Komponente 2 und einem Halter 3 in einer auszugsweisen, schematischen Schnittdarstellung entsprechend einem sechsten Ausführungsbeispiel bei einer Montage. In diesem Ausführungsbeispiel ist das Kopfteil 11 als geschlossener Ring mit einer Klemmschlaufe 45 ausgestaltet. Hierbei kann ein gewisses Spiel vorgegeben werden, um ein axiales Aufschieben des Kopfteils 11 des Verbindungskörpers 7 auf den rohrförmigen Grundkörper 4 zu erleichtern. Nach dem Aufschieben und Positionieren des Verbindungskörpers 7 kann über ein geeignetes Werkzeug aus den Richtungen 37, 38 ein Verpressen der Klemmschlaufe 45 erfolgen. Durch das Verpressen wird ein minimaler Spalt zwischen dem rohrförmigen Grundkörper 4 und der Aufnahmefläche 31 des Kopfteils 11 erzielt. Daraus ergibt sich eine hohe Lötqualität. Das Zusammendrücken der Klemmschlaufe 45 kann beispielsweise durch Drücken oder Pressen erfolgen.

Fig. 9 zeigt die in Fig. 8 dargestellte Anordnung 1 entsprechend dem sechsten Ausführungsbeispiel in einem montierten Zustand. Hierbei ist die Klemmschlaufe 45 zusammengedrückt beziehungsweise zusammengepresst. Das als verformbarer Ring 11 ausgestaltete Kopfteil 11 liegt dadurch mit seiner Aufnahmefläche 31 zumindest weitgehend an der Außenseite 30 des rohrförmigen Grundkörpers 4 der Komponente 2 an.

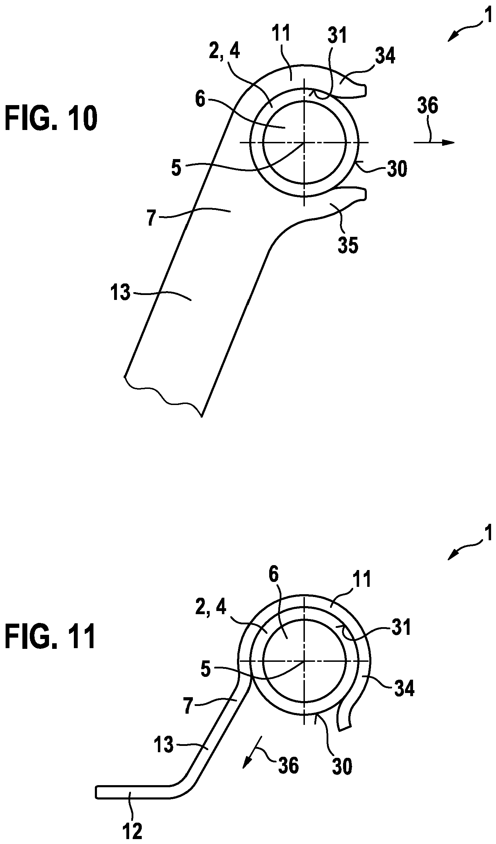

Fig. 10 zeigt eine Anordnung 1 mit einer Komponente 2 und einem Halter 3 in einer auszugsweisen, schematischen Schnittdarstellung entsprechend einem siebten Ausführungsbeispiel. In diesem Ausführungsbeispiel ist das Kopfteil 11 des Verbindungskörpers 7 zumindest näherungsweise gabelförmig ausgestaltet. Allerdings erstreckt sich die Aufnahmefläche 31 bezüglich der Längsachse 5 über einen Winkel von mehr als 180°. Hierbei sind Verbindungsarme 34, 35 ausgestaltet, wobei zumindest einer der Verbindungsarme 34, 35 federnd ausgestaltet ist. Dadurch ist eine radiale Montage des Verbindungskörpers 7 mit seinem Kopfteil 11 in der radialen Richtung 36 auf den rohrförmigen Grundkörper 4 möglich. Bei dieser Montage biegen sich die Verbindungsarme 34, 35 elastisch auf, so dass das gabelförmige Kopfteil 11 auf den rohrförmigen Grundkörper 4 aufschnappt beziehungsweise aufgeclipst wird. Hierdurch kann auch eine gewisse Vorspannung im montierten Zustand gewährleistet werden. Hierdurch kann auch eine Vorfixierung, wie Heften, eventuell entfallen.

Fig. 11 zeigt eine Anordnung 1 mit einer Komponente 2 und einem Halter 3 in einer auszugsweisen, schematischen Schnittdarstellung entsprechend einem achten Ausführungsbeispiel. In diesem Ausführungsbeispiel weist das Kopfteil 11 einen Verbindungsarm 34 auf, der federnd ausgestaltet ist. Hierbei umschließt das Kopfteil 11 mit seiner Aufnahmefläche 31 im montierten Zustand den rohrförmigen Grundkörper 4 über einen Winkel von mehr als 180°. Zur Montage kann der Verbindungskörper 7 mit seinem Kopfteil 11 in der radialen Richtung 36 auf den rohrförmigen Grundkörper 4 gefügt werden. Dadurch kann der Verbindungskörper 7 mit seinem offenen Kopfteil 11 auf den rohrförmigen Grundkörper 4 geclipst werden. Hierbei schnappt der Verbindungsarm 34 auf den rohrförmigen Grundkörper 4 auf. Das Fußteil 12 des Verbindungskörpers 7 kann hierbei auf geeignete Weise orientiert sein. Insbesondere kann das Fußteil 12 flach orientiert sein, wie es in der Fig. 11 gezeigt ist, oder hochkant.

Somit sind verschiedene Ausgestaltungen denkbar, bei denen das Kopfteil 11 des Verbindungskörpers 7 im montierten Zustand mit seiner Aufnahmefläche 31 den rohrförmigen Grundkörper 4 mit einem Winkel von mehr als 180° umschlingt. Solch ein Winkel kann hierbei kleiner als 360° oder auch gleich 360° vorgegeben sein. Ferner kann das Erzeugen des Umschlingungswinkels am rohrförmigen Grundkörper 4 auch erst während des Montageprozesses, insbesondere durch Aufclipsen oder plastisches Formen, erreicht werden, was mit einem radialen Fügen der Einzelteile verbunden sein kann.

Die Erfindung ist nicht auf die beschriebenen Ausführungsbeispiele beschränkt.

## Patentansprüche

1. Halter (3) zur Befestigung einer Komponente (2), insbesondere eines Brennstoffverteilers (2), an einer Brennkraftmaschine mit zumindest einem Verbindungskörper (7), wobei der Verbindungskörper (7) eine Aufnahmefläche (31) aufweist und wobei sich die Aufnahmefläche (31) des Verbindungskörpers (7) im montierten Zustand, in dem der Verbindungskörper (7) mit seiner Aufnahmefläche (31) an einer Außenseite (30) der Komponente (2) anliegt, bezüglich einer Längsachse (5) der Komponente (2) über einen Winkel erstreckt, der größer als 180° ist,
**dadurch gekennzeichnet,**
**dass** eine Hülse (9) vorgesehen ist, dass an einer Außenseite (17) der Hülse (9) eine erste Befestigungsfläche (18) vorgesehen ist, dass ein Fußteil (12) des Verbindungskörpers (7) an der ersten Befestigungsfläche (18) der Hülse (9) mit der Hülse (9) verbunden ist, dass an der Außenseite (17) der Hülse (9) eine zweite Befestigungsfläche (19) vorgesehen ist, die von der ersten Befestigungsfläche (18) abgewandt ist, und dass ein Fußteil (15) eines weiteren Verbindungskörpers (8) an der zweiten Befestigungsfläche (19) der Hülse (9) mit der Hülse (9) verbunden ist, wobei im montierten Zustand auch der weitere Verbindungskörper (8) mit seiner Aufnahmefläche (32) an der Außenseite (30) der Komponente (2) anliegt.

2. Halter nach Anspruch 1,
**dadurch gekennzeichnet,**
**dass** der Winkel, über den sich die Aufnahmefläche (31) des Verbindungskörpers (7) im montierten Zustand bezüglich der Längsachse (5) der Komponente (2) erstreckt, gleich 360° oder kleiner als 360° ist.

3. Halter nach Anspruch 1 oder 2,
**dadurch gekennzeichnet,**
**dass** der Verbindungskörper (7) zumindest einen Verbindungsarm (34) aufweist, der im montierten Zustand in Anlage mit der Außenseite (30) der Komponente (2) um die Außenseite (30) der Komponente (2) gebogen ist.

4. Halter nach Anspruch 3,
**dadurch gekennzeichnet,**
**dass** der Verbindungskörper (7) einen weiteren Verbindungsarm (35) aufweist, der im montierten Zustand in Anlage mit der Außenseite (30) der Komponente (2) um die Außenseite (30) der Komponente (2) gebogen ist.

5. Halter nach Anspruch 4,
**dadurch gekennzeichnet,**
**dass** im montierten Zustand zwischen dem Verbindungsarm (34) und dem weiteren Verbindungsarm (35) ein Abstand (39) vorgegeben ist und dass der Verbindungsarm (34) und der weitere Verbindungsarm (35) an dem vorgegebenen Abstand (39) stoffschlüssig miteinander verbunden sind.

6. Halter nach Anspruch 4,
**dadurch gekennzeichnet,**
**dass** im montierten Zustand zwischen dem Verbindungsarm (34) und dem weiteren Verbindungsarm (35) ein Spalt (41) oder Schlitz (42) gebildet ist.

7. Halter nach Anspruch 3 oder 4,
**dadurch gekennzeichnet,**
**dass** der zumindest eine Verbindungsarm (34, 35) federnd ausgestaltet ist und dass der Verbindungskörper (7) mittels einer Schnappverbindung mit der Komponente (2) verbindbar ist.

8. Halter nach Anspruch 1 oder 2,
**dadurch gekennzeichnet,**
**dass** der Verbindungskörper (7) ein verformbares, ringförmiges Kopfteil (11) mit zumindest einer Klemmschlaufe (45) aufweist.

9. Anordnung (1) mit einer Komponente (2), insbesondere einem Brennstoffverteiler (2), und zumindest einem Halter (3) nach einem der Ansprüche 1 bis 8, wobei die Komponente (2) einen rohrförmigen Grundkörper (4) mit einer Außenseite (17) aufweist, wobei der Verbindungskörper (7) des Halters (3) mit seiner Aufnahmefläche (31) an der Außenseite (30) des rohrförmigen Grundkörpers (4) der Komponente (2) anliegt und wobei der Verbindungskörper (7) den rohrförmigen Grundkörper (4) mit seiner Aufnahmefläche (31) über einen Winkel umfänglich umgreift, der größer als 180° ist.

## Claims

1. Holder (3) for fastening a component (2), in particular a fuel distributor (2), to an internal combustion engine, having at least one connecting body (7), wherein the connecting body (7) has a receiving surface (31) and wherein the receiving surface (31) of the connecting body (7), in the installed state in which the connecting body (7) bears with its receiving surface (31) against an outer side (30) of the component (2), extends over an angle greater than 180° with respect to a longitudinal axis (5) of the component (2),
**characterized**
**in that** a sleeve (9) is provided, in that a first fastening surface (18) is provided on an outer side (17) of the sleeve (9), in that a foot part (12) of the connecting body (7) is connected to the sleeve (9) at the first fastening surface (18) of the sleeve (9), in that a second fastening surface (19) is provided on the outer side (17) of the sleeve (9), which second fastening surface is averted from the first fastening surface (18), and in that a foot part (15) of a further connecting body (8) is connected to the sleeve (9) at the second fastening surface (19) of the sleeve (9), wherein, in the installed state, the further connecting body (8) also bears with its receiving surface (32) against the outer side (30) of the component (2).

2. Holder according to Claim 1,
**characterized**
**in that** the angle over which the receiving surface (31) of the connecting body (7), in the installed state, extends with respect to the longitudinal axis (5) of the component (2) is equal to 360° or less than 360°.

3. Holder according to Claim 1 or 2,
**characterized**
**in that** the connecting body (7) has at least one connecting arm (34) which, in the installed state, is bent around the outer side (30) of the component (2) so as to come to bear against the outer side (30) of the component (2).

4. Holder according to Claim 3,
**characterized**
**in that** the connecting body (7) has a further connecting arm (35) which, in the installed state, is bent around the outer side (30) of the component (2) so as to come to bear against the outer side (30) of the component (2).

5. Holder according to Claim 4,
**characterized**
**in that**, in the installed state, a spacing (39) is predefined between the connecting arm (34) and the further connecting arm (35), and in that the connecting arm (34) and the further connecting arm (35) are cohesively connected to one another at the predefined spacing (39).

6. Holder according to Claim 4,
**characterized**
**in that**, in the installed state, a gap (41) or slot (42) is formed between the connecting arm (34) and the further connecting arm (35).

7. Holder according to Claim 3 or 4,
**characterized**
**in that** the at least one connecting arm (34, 35) is of resilient design, and in that the connecting body (7) is connectable to the component (2) by means of a snap-action connection.

8. Holder according to Claim 1 or 2,
**characterized**
**in that** the connecting body (7) has a deformable, ringshaped head part (11) with at least one clamping loop (45) .

9. Arrangement (1) having a component (2), in particular a fuel distributor (2), and at least one holder (3) according to any of Claims 1 to 8, wherein the component (2) has a tubular main body (4) with an outer side (17), wherein the connecting body (7) of the holder (3) bears with its receiving surface (31) against the outer side (30) of the tubular main body (4) of the component (2), and wherein the connecting body (7) circumferentially engages with its receiving surface (31) around the tubular main body (4) over an angle greater than 180°.

## Revendications

1. Support (3) permettant de fixer un composant (2), en particulier un distributeur de carburant (2), sur un moteur à combustion interne avec au moins un corps de liaison (7), dans lequel le corps de liaison (7) présente une face de logement (31) et dans lequel la face de logement (31) du corps de liaison (7) s'étend, dans l'état monté dans lequel le corps de liaison (7) s'applique avec sa face de logement (31) sur un côté extérieur (30) du composant (2), sous un angle qui est supérieur à 180° par rapport à un axe longitudinal (5) du composant (2), **caractérisé en ce qu'**il est prévu une douille (9), **en ce qu'**il est prévu une première face de fixation (18) sur un côté extérieur (17) de la douille (9), **en ce qu'**une partie de pied (12) du corps de liaison (7) est assemblée à la douille (9) sur la première face de fixation (18) de la douille (9), **en ce qu'**il est prévu sur le côté extérieur (17) de la douille (9) une seconde face de fixation (19), qui est opposée à la première face de fixation (18), et **en ce qu'**une partie de pied (15) d'un autre corps de liaison (8) est assemblée à la douille (9) sur la seconde face de fixation (19) de la douille (9), dans lequel dans l'état monté l'autre corps de liaison (8) s'applique également avec sa face de logement (32) sur le côté extérieur (30) du composant (2).

2. Support selon la revendication 1, **caractérisé en ce que** l'angle, sous lequel la face de logement (31) du corps de liaison (7) s'étend dans l'état monté par rapport à l'axe longitudinal (5) du composant (2), est égal à 360° ou inférieur à 360°.

3. Support selon la revendication 1 ou 2, **caractérisé en ce que** le corps de liaison (7) présente au moins un bras de liaison (34), qui dans l'état monté est incurvé autour du côté extérieur (30) du composant (2) en venant en application sur le côté extérieur (30) du composant (2) .

4. Support selon la revendication 3, **caractérisé en ce que** le corps de liaison (7) présente un autre bras de liaison (35), qui dans l'état monté est incurvé autour du côté extérieur (30) du composant (2) en venant en application sur le côté extérieur (30) du composant (2).

5. Support selon la revendication 4, **caractérisé en ce que** dans l'état monté il existe une distance (39) entre le bras de liaison (34) et l'autre bras de liaison (35) et **en ce que** le bras de liaison (34) et l'autre bras de liaison (35) sont assemblés par liaison de matière l'un à l'autre à la distance prédéterminée (39).

6. Support selon la revendication 4, **caractérisé en ce que** dans l'état monté un espace (41) ou une fente (42) est formé (e) entre le bras de liaison (34) et l'autre bras de liaison (35).

7. Support selon la revendication 3 ou 4, **caractérisé en ce que** ledit au moins un bras de liaison (34, 35) est réalisé sous forme élastique et **en ce que** le corps de liaison (7) peut être assemblé au composant (2) au moyen d'un assemblage à déclic.

8. Support selon la revendication 1 ou 2, **caractérisé en ce que** le corps de liaison (7) présente une partie de tête annulaire déformable (11) avec au moins une boucle de serrage (45).

9. Agencement (1) avec un composant (2), en particulier un distributeur de carburant (2), et au moins un support (3) selon l'une quelconque des revendications 1 à 8, dans lequel le composant (2) présente un corps de base tubulaire (4) avec un côté extérieur (17), dans lequel le corps de liaison (7) du support (3) s'applique avec sa face de logement (31) sur le côté extérieur (30) du corps de base tubulaire (4) du composant (2) et dans lequel le corps de liaison (7) entoure le corps de base tubulaire (4) avec sa face de logement (31) de manière périphérique sur un angle qui est supérieur à 180°.
